# FASCICULE DE BREVET EUROPEEN

(11) **EP 0 493 155 B1**
(45) Date de publication et mention de la délivrance du brevet: **08.03.1995**
(21) Numéro de dépôt: 91403238.8
(22) Date de dépôt: 29.11.1991
(51) Int. Cl.: B60T 17/22

(54) **Soupape de purge pour circuit hydraulique et procédé de purge d'un circuit hydraulique muni d'une telle soupape**
Ventil und Verfahren zur Hydraulikkreislaufentlüftung
Valve and method for bleeding of hydraulic circuit

(30) Priorité: 20.12.1990 FR 9016027; 07.02.1991 FR 9101360
(43) Date de publication de la demande: 01.07.1992
(73) Titulaire: ALLIEDSIGNAL EUROPE SERVICES TECHNIQUES, 93700 Drancy (FR)
(72) Inventeur: Veret, Dominique, Bendix Eur. Services Techniques, F-93700 Drancy (FR); Audrain, Patrick, Bendix Eur. Services Techniques, F-93700 Drancy (FR)
(74) Mandataire: Bentz, Jean-Paul

(56) Documents cités:
- FR-A- 2 548 609
- GB-A- 892 817
- GB-A- 1 160 687
- US-A- 3 425 750

## Description

La présente invention a pour objet une soupape de purge pour circuit hydraulique, par exemple pour circuit de freinage de véhicule automobile.

Lors du remplissage de tels circuits de freinage, il est habituel, et connu d'une manière générale sous le nom de "purge sous vide", de créer une relativement forte dépression dans le système de freinage avant de remplir celui-ci avec du liquide de freins, en opérant par le réservoir d'alimentation du maître-cylindre, de sorte que lors de l'apport de fluide subséquent à l'application de la dépression, il n'y ait pas d'inclusion d'air dans le circuit de freinage.

Les circuits de freinage modernes peuvent être constitués de plusieurs sous-circuits entre lesquels peuvent être disposés des clapets, qui sont fermés dans leur position de repos et qui donc interdisent la communication entre les sous-circuits. Il s'ensuit alors que certaines parties du circuit hydraulique sont isolées et ne sont donc pas purgées. Il est alors nécessaire d'agir extérieurement sur ces clapets, par exemple mécaniquement, pour les maintenir dans leur position d'ouverture afin que la totalité du circuit hydraulique soit concernée par l'opération de purge sous vide.

On connaît par le document FR-A-2 548 609, correspondant au préambule de la revendication principale, une soupape de purge permettant la purge d'un circuit hydraulique, et dans laquelle un clapet est maintenu ouvert grâce à une action extérieure mécanique sur une extrémité d'un piston dont l'autre extrémité constitue le clapet lui-même. Cette soupape présente toutefois l'inconvénient que l'étanchéité entre l'intérieur et l'extérieur de la soupape est assurée par le piston lui-même, solidaire du clapet, ce qui entraîne une position constante de fermeture du clapet. Si on désire une communication entre sous-circuits, par exemple sous l'effet d'une différence de pression entre ces sous-circuits, il faudra alors ajouter une autre valve d'où une complexité et un coût accrus du circuit hydraulique.

On connaît de US-A-3 425 750 une soupape permettant d'assurer un retard dans la distribution de la pression entre les freins avant et les freins arrière tout en autorisant une purge facile des circuits hydrauliques. Toutefois, une telle soupape ne peut pas constituer un élément d'une valve anti-retour.

On connaît également, du document GB-A-1 160 687, un dispositif de purge pour circuit hydraulique, dans lequel une valve anti-retour, est maintenue en position ouverte pour permettre le fonctionnement normal du circuit hydraulique, et est laissée libre de se mouvoir sous l'effet d'une pression différentielle pour permettre les purges d'entretien du circuit hydraulique, en association avec des vis de purge disposées sur les récepteurs de pression. Un tel dispositif est inadapté à une purge sous vide du circuit hydraulique.

La présente invention a donc pour objet une soupape de purge pour purge sous vide d'un circuit hydraulique, qui soit de conception simple, robuste et fiable, et dont les mouvements du clapet restent libres de façon à lui permettre de faire office de valve anti-retour, lors d'un fonctionnement normal du circuit hydraulique.

Dans ce but, l'invention propose une soupape de purge pour circuit hydraulique, comportant un piston pouvant coulisser dans un alésage formé dans un corps et actionnant un clapet disposé entre deux sous-circuits et mobile entre une première position dans laquelle il permet la communication entre les deux sous-circuits et une seconde position dans laquelle il interdit cette communication, le clapet étant mobile sous l'effet d'une action mécanique extérieure exercée par un organe d'actionnement pour une opération de purge sous vide du circuit hydraulique.

Selon l'invention, l'organe d'actionnement est distinct du piston, l'organe d'actionnement revient dans une position inactive sous l'effet de la pression hydraulique régnant dans l'alésage quand ladite force est relâchée lors du fonctionnement normal du circuit hydraulique, et le clapet est également mobile sous l'effet d'une différence entre les pressions qui s'exercent sur ses deux faces quand l'organe d'actionnement est dans ladite position inactive.

On obtient ainsi une conception simple et fiable, dans laquelle le mouvement du clapet est totalement libre.

La présente invention a également pour objet un procédé de purge d'un circuit hydraulique comportant une soupape de purge selon la présente invention.

Un tel procédé comprend les étapes suivantes :
- On exerce une force sur l'organe d'actionnement pour que celui-ci entre en contact avec le piston pour amener le clapet dans sa première position
- On effectue la purge sous-vide du circuit hydraulique
- On relâche la force exercée sur l'organe d'actionnement pour que celui-ci perde le contact avec le piston lorsque le clapet est ramené dans sa deuxième position sous l'effet d'un ressort de rappel.

L'invention sera mieux comprise et d'autres buts, avantages et caractéristiques apparaîtront plus clairement à la lecture de la description qui suit de modes préférés de réalisation donnés à titre non limitatif et en référence aux dessins annexés sur lesquels :
- La Figure 1 représente en coupe une soupape de purge de l'art antérieur,
- La Figure 2 représente en coupe un premier mode de réalisation d'une soupape de purge réalisée conformément à la présente invention,
- La Figure 3 représente en coupe un deuxième mode de réalisation d'une soupape de purge réalisée conformément à la présente invention.
- La Figure 4 représente en coupe un troisième mode de réalisation d'une soupape de purge réalisée conformément à la présente invention.

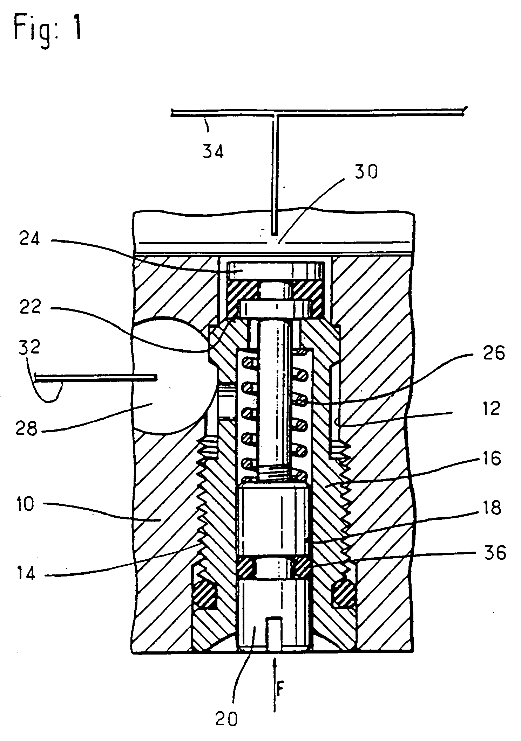

On a représenté sur la Figure 1 en coupe une soupape de purge, telle que connue par exemple par le document précité. Cette soupape comporte un carter 10 dans lequel est aménagé un alésage cylindrique 12. Dans un filet hélicoïdal 14 de l'alésage cylindrique 12 est vissée une douille d'insertion 16 comportant un alésage 18 dans lequel un piston 20 est disposé à coulissement. L'extrémité supérieure ("supérieure" en considérant la Figure 1) de la douille d'insertion 16 est aménagée en siège de valve 22 qui, en coopération avec la portion terminale 24 du piston 20, constitue le "passage de valve" de cette soupape. Le piston 20 est précontraint, dans le sens correspondant à la fermeture du passage de valve 22, 24, par un ressort de compression 26. La valve 22, 24 autorise ou interrompt la communication entre deux raccords 28, 30 respectivement reliés à des sous-circuits 32, 34, la portion terminale du piston 20 éloignée de l'organe obturateur 24 portant un anneau d'étanchéité 36 coopérant avec l'alésage 18.

L'opération de purge sous vide du circuit hydraulique dans lequel est insérée la soupape qui vient d'être décrite, s'effectue en appliquant avec étanchéité un dispositif de remplissage (non représenté) à l'un des sous-circuits 32 ou 34. Une pompe à vide est alors mise en marche et aspire l'air du circuit. Lors de ce processus, le piston 20 est soumis à une force F qui maintient le passage de valve 22, 24 à une position d'ouverture, la force F étant fournie par exemple au moyen d'une tige.

Lorsque la pression dans le circuit a été abaissée à une valeur requise, une conduite de sortie d'air du dispositif de remplissage (non représenté) est fermée, et du fluide hydraulique se trouvant sous une faible pression est introduit dans le circuit. Après remplissage du circuit, la Force F est supprimée, de sorte que le ressort de compression déplace le piston 20 à la position représentée sur la Figure 1, position dans laquelle le passage de valve 22, 24 est fermé. On voit donc que, sauf intervention extérieure, le clapet restera toujours fermé et isolera les circuits 32 et 34 l'un de l'autre.

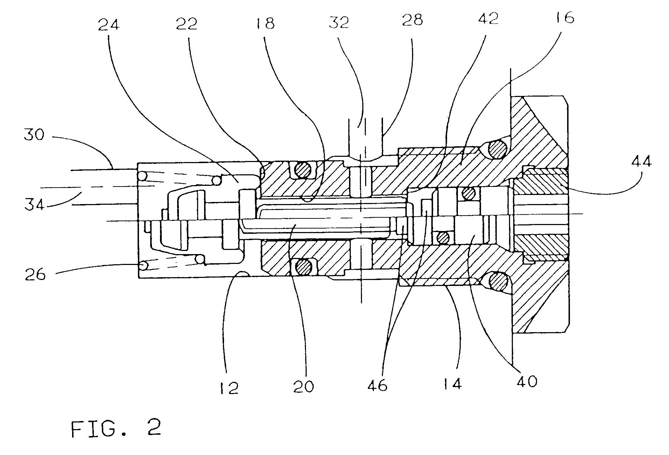

Cet inconvénient est évité grâce à l'invention, dont un mode de réalisation a été représenté sur la Figure 2, où les mêmes éléments que ceux de la Figure 1 portent les mêmes numéros de référence. La moitié supérieure de la Figure 2 montre la soupape de purge dans sa position de repos, et la moitié inférieure montre cette même soupape au cours de l'opération de purge sous vide.

On a représenté sur la Figure 2 un premier mode de réalisation d'un soupape de purge réalisée conformément à la présente invention, constituée d'un piston 20 coulissant dans un alésage 18 formé dans un corps 16. L'extrémité gauche (en considérant la Figure 2) du piston 20 forme un clapet 24, coopérant avec un siège de clapet 22 formé sur le corps 16. Le clapet 24 est rappelé dans sa position de repos par un ressort 26 et, suivant sa position, permet ou interdit la communication entre des raccords 28 et 30 reliés respectivement à deux sous-circuits 32 et 34.

Dans l'alésage 18 coulisse de façon étanche un second piston 40, disposé du côté du piston 20 opposé au clapet 24. Le mouvement du second piston 40 est limité, d'un côté par un épaulement 42 formé dans l'alésage 18, et de l'autre par un écrou 44 vissé dans l'extrémité de l'alésage 18 débouchant vers l'extérieur. Le second piston 40 porte, sur sa face tournée vers le piston 20, une extension cylindrique 46 de diamètre inférieur à celui de l'alésage 18.

Lors d'une opération de purge sous vide, on exerce une force, par exemple à l'aide d'un vérin ou d'une tige passant à travers l'écrou 44, sur le second piston 40, de façon à ce que l'extension cylindrique 46 entre en contact avec le piston 20 et pousse ce dernier pour mettre le clapet 24 dans une première position d'ouverture où il permet la communication entre les deux sous-circuits 32 et 34, ainsi que l'illustre la moitié inférieure de la Figure 2. Après mise sous vide du circuit complet et remplissage subséquent de fluide hydraulique, rendu possible grâce à l'ouverture du clapet 24, on relâche la force exercée sur le second piston 40, qui revient vers la droite (en considérant la Figure 2), d'abord sous l'effet du ressort 26 agissant sur le clapet 24 et sur le piston 20, puis sous l'effet de la pression hydraulique régnant dans l'alésage 18, jusqu'à ce qu'il soit arrêté par l'écrou 44. Le clapet 24 est alors revenu dans une deuxième position de fermeture où il interdit la communication entre les deux sous-circuits 32 et 34 et le second piston 40 est en repos contre l'écrou 44, ainsi que l'illustre la moitié supérieure de la Figure 2.

On voit donc que, grâce à l'invention, l'étanchéité de la soupape de purge, vis à vis de l'extérieur, est assurée par le second piston 40, qui joue le rôle d'organe d'actionnement du piston 20 pour l'opération de purge, ce qui laisse le piston 20, et donc le clapet 24, libre de se mouvoir sous l'effet d'une différence entre les pressions qui s'exercent sur ses deux faces. Le clapet 24 pourra par exemple s'ouvrir lorsque la pression dans le sous-circuit 32 sera suffisante pour vaincre la force du ressort 26 et la pression dans le sous-circuit 34, et ce sans aucune entrave. Ceci sera notamment utile si le raccord 28 est connecté, en fonctionnement normal, à une pompe, comme il peut se faire avec un dispositif d'antiblocage de roue. Dans ce cas, le clapet 24 fonctionnera comme celui d'une valve anti-retour.

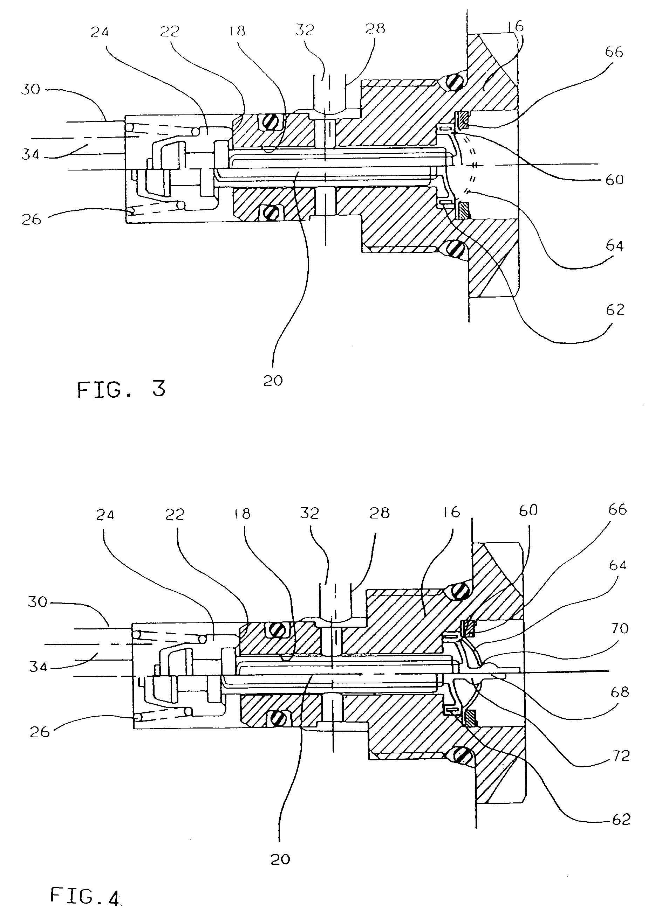

Les Figures 3 et 4 représentent un autre mode de réalisation des soupapes de purge.

La moitié supérieure de ces Figures représente les soupapes de purge dans leurs positions de repos, et la moitié inférieure de ces Figures montre les mêmes soupapes au cours de l'opération de purge.

On reconnaît sur la Figure 3 une soupape de purge telle qu'on l'a décrite précédemment, qui comprend un piston 20 coulissant dans un alésage 18 formé dans un corps 16. L'extrémité gauche (en considérant la Figure 3) du piston 20 forme un clapet 24, coopérant avec un siège de clapet 22 formé sur le corps 16. Le clapet 24 est rappelé dans sa position de repos par un ressort 26 et, suivant sa position, permet ou interdit la communication entre des raccords 28 et 30 reliés respectivement à deux sous-circuits 32 et 34.

A l'extrémité de l'alésage 18 débouchant vers l'extérieur, située à droite sur la Figure 3, et dans une partie élargie de celui-ci, est disposée une membrane 60. Cette membrane 60 est fixée par sa périphérie extérieure sur le corps 16, un insert métallique cylindrique 62 pouvant avantageusement être prévu pour assurer le maintien de cette membrane. Conformément à l'invention, on voit que la membrane 60 joue à la fois le rôle d'étanchéification de l'alésage 18 par rapport à l'extérieur du corps 16 et le rôle d'organe d'actionnement. En effet, lors d'une opération de purge sous vide, on exerce une force, à l'aide d'un outil approprié, sur la membrane 60, de façon à ce qu'elle pousse le piston 20 pour mettre le clapet 24 dans une première position d'ouverture où il permet la communication entre les deux sous-circuits 32 et 34, ainsi que l'illustre la moitié inférieure de la Figure 3. Après mise sous vide du circuit complet constitué des deux sous-circuits et remplissage subséquent de fluide hydraulique, rendu possible grâce à l'ouverture du clapet 24, on relâche la force exercée sur la membrane 60 qui revient vers la droite (en considérant la Figure 3) d'abord sous l'effet du ressort 26 agissant sur le clapet 24 et sur le piston 20, puis sous l'effet de la pression hydraulique régnant dans l'alésage 18. Le clapet 24 est alors revenu dans une deuxième position de fermeture où il interdit la communication entre les deux sous-circuits 32 et 34, ainsi que l'illustre la moitié supérieure de la Figure 3. Le clapet 24 est alors libre de se mouvoir sous l'effet d'une différence entre les pressions qui s'exercent sur ses deux faces et qui règnent dans les sous-circuits 32 et 34.

Comme on l'a représenté en pointillés sur la Figure 3, on pourra disposer, une fois l'opération de purge effectuée, un capot 64 à proximité de la membrane 60, du côté de celle-ci qui est tourné vers l'extérieur, et donc opposé à celui où se trouve le piston 20. Ce capot 64 peut être retenu par un circlips 66, et joue à la fois le rôle de capot de protection de la membrane 60 contre des agressions extérieures éventuelles, et celui de limitation du mouvement de la membrane vers l'extérieur du corps 16. On pourra également prévoir, en variante, de laisser le capot 64 à demeure, et d'y pratiquer en son centre une ouverture offrant un passage pour l'outil devant exercer une force sur la membrane pour effectuer l'opération de purge.

On a représenté sur la Figure 4 une variante du mode de réalisation représenté sur la Figure 3, dans laquelle on retrouve les mêmes éléments affectés des mêmes références numériques. On voit sur cette Figure qu'une tige 68 a été prévue pour transmettre une force sur la membrane 60, cette tige 68 passant à travers une ouverture 70 pratiquée dans le capot 64. De façon avantageuse, on peut prévoir de former sur la tige 68, à proximité de son extrémité située près de la membrane 60, un renflement ou bourrelet 72, de diamètre extérieur légèrement supérieur à celui de l'ouverture 70. De la sorte, dans la position de la soupape représentée sur la moitié inférieure de la Figure 4, la tige 68 occupe une position stable où elle sollicite le piston 20 et le clapet 24 à l'encontre du ressort 26 dans la première position d'ouverture de clapet 24, sans qu'il soit besoin d'exercer une force continue sur la tige 68 pour effectuer l'opération de purge sous vide. Une fois cette opération effectuée, il suffit de tirer (vers la droite sur la Figure 4) sur la tige 68 avec une force suffisante pour faire passer le bourrelet 72 par l'ouverture 70 pour amener la tige 68 dans la position représentée sur la moitié supérieure de la Figure 5. Comme précédemment, la membrane 60 est alors libre de revenir vers la droite (en considérant la Figure 4), d'abord sous l'effet du ressort 26 agissant sur le clapet 24 et le piston 20, puis sous l'effet de la pression hydraulique régnant dans l'alésage 18, jusqu'à ce qu'elle vienne au contact du capot 64.

Dans une variante de réalisation, on pourra prévoir de réaliser la membrane 60 et la tige 68 avec son bourrelet 72 d'une seule pièce. La membrane 60 occupera alors deux positions stables selon que le bourrelet 72 se trouve à l'intérieur ou à l'extérieur du capot 64. Si le bourrelet 72 se trouve à l'intérieur du capot 64, comme on l'a représenté sur la moitié inférieure de la Figure 4, la membrane occupe une position stable dans laquelle elle sollicite le piston 20 et le clapet 24 dans la première position d'ouverture du clapet 24, et si le bourrelet 72 se trouve à l'extérieur du capot 64 comme on l'a représenté sur la moitié supérieure de la Figure 4, la membrane 60 est alors sollicitée en direction de celui-ci et permet au piston 20 et au clapet 24 d'occuper la deuxième position de fermeture du clapet 24, laissant ce dernier libre de se mouvoir en fonction des différences entre les pressions hydrauliques dans les sous-circuits 32 et 34 et s'appliquant sur ses deux faces.

On voit donc bien qu'on a réalisé, grâce à l'invention, une soupape permettant la purge d'un circuit hydraulique par l'intermédiaire d'un organe d'actionnement entrant en jeu pour l'opération de purge, assurant l'étanchéité de la soupape vis-à-vis de l'extérieur, et n'entravant pas les mouvements ultérieurs du clapet. La soupape ainsi réalisée est particulièrement simple et fiable, et autorise la purge d'un circuit hydraulique selon un procédé lui aussi particulièrement simple. Bien qu'ayant été décrite en relation avec un circuit de freinage, il est bien évident que l'invention s'applique à tout circuit hydraulique comportant des sous-circuits séparés par une soupape et nécessitant une purge.

## Revendications

1. Soupape de purge pour circuit hydraulique comportant un piston (20) pouvant coulisser dans un alésage (18) formé dans un corps (16) et actionnant un clapet (24) disposé entre deux sous-circuits (32, 34) et mobile entre une première position dans laquelle il permet la communication entre les deux sous-circuits et une seconde position dans laquelle il interdit cette communication, le clapet étant mobile sous l'effet d'une action mécanique extérieure exercée sur un organe d'actionnement (40) pour une opération de purge sous vide du circuit hydraulique, l'étanchéité entre l'alésage et l'extérieur du corps étant assurée par l'organe d'actionnement (40), caractérisé en ce que l'organe d'actionnement (40) est distinct du piston (20), en ce que l'organe d'actionnement (40) revient dans une position inactive sous l'effet de la pression hydraulique régnant dans l'alésage (18) quand ladite force est relâchée lors du fonctionnement normal du circuit hydraulique et en ce que le clapet (24) est également mobile sous l'effet d'une différence entre les pressions qui s'exercent sur ses deux faces quand l'organe d'actionnement (40) est dans ladite position inactive.

2. Soupape selon la revendication 1, caractérisée en ce que l'organe d'actionnement (40) est constitué d'un second piston mobile dans l'alésage.

3. Soupape selon la revendication 2, caractérisée en ce que le second piston (40) est mobile entre un épaulement (42) formé dans l'alésage (18) et une pièce d'arrêt (44) à l'extrémité de l'alésage débouchant vers l'extérieur du corps.

4. Soupape selon la revendication 3, caractérisée en ce que la pièce d'arrêt (44) est un écrou vissé à l'extrémité de l'alésage (18) débouchant vers l'extérieur du corps (16).

5. Soupape selon la revendication 1, caractérisée en ce que l'organe d'actionnement (60, 68) comporte une partie élastiquement déformable (60).

6. Soupape selon la revendication 5, caractérisée en ce que la partie élastiquement déformable (60) de l'organe d'actionnement (60, 68) est fixée par sa périphérie extérieure sur le corps (16) de la soupape.

7. Soupape selon la revendication 5 ou 6, caractérisée en ce que la partie élastiquement déformable (60) de l'organe d'actionnement est constituée d'une membrane (60).

8. Soupape selon la revendication 7, caractérisée en ce que la périphérie extérieure de la membrane (60) est pourvue d'un insert métallique cylindrique (62).

9. Soupape selon l'une quelconque des revendications 5 à 8, caractérisé en ce qu'un capot (64) est fixé sur le corps (16) de la soupape à proximité de la membrane (60) et du côté de celle-ci qui est opposé à celui où se trouve le piston (20).

10. Soupape selon la revendication 9, caractérisée en ce que le capot (64) est percé d'une ouverture (70) en son centre.

11. Soupape selon la revendication 5, caractérisée en ce que l'organe d'actionnement (60, 68) comporte de plus une tige d'actionnement (68) du côté de celui-ci qui est opposé à celui où se trouve le piston (20).

12. Soupape selon les revendications 10 et 11, caractérisé en ce que la tige d'actionnement (68) passe à travers l'ouverture (70) du capot (64).

13. Soupape selon la revendication 12, caractérisé en ce que la tige d'actionnement (68) comporte à proximité de son extrémité située près de la membrane (60), un bourrelet (72) de diamètre extérieur supérieur à celui de l'ouverture (70) du capot (64), ce bourrelet (72) définissant deux positions stables de l'organe d'actionnement (60, 68).

14. Soupape selon la revendication 13, caractérisé en ce que la tige d'actionnement (68) et la membrane (60) sont formées d'une seule pièce.

15. Procédé de purge d'un circuit hydraulique comportant une soupape selon l'une des revendications précédentes, caractérisé en ce qu'il comprend les étapes suivantes :
- On exerce une force sur l'organe d'actionnement (40, 50, 60) pour que celui-ci entre en contact avec le piston (20) pour amener le clapet (24) dans la première position.
- On effectue la purge sous vide du circuit hydraulique.
- On relâche la force exercée sur l'organe d'actionnement (40, 50, 60) pour que celui-ci perde le contact avec le piston (20) lorsque le clapet (24) est ramené dans sa deuxième position sous l'effet d'un ressort de rappel (26).

## Claims

1. Bleed valve for a hydraulic circuit, comprising a piston (20) capable of sliding in a bore (18) formed in a body (16) and actuating a shutter (24) arranged between two sub-circuits (32, 34) and movable between a first position, in which it allows communication between the two sub-circuits, and a second position, in which it prevents this communication, the shutter being movable under the effect of an external mechanical action exerted on an actuating member (40) for an operation of vacuum bleeding of the hydraulic circuit, sealing between the bore and the outside of the body being ensured by the actuating member (40), characterized in that the actuating member (40) is distinct from the piston (20), in that the actuating member (40) returns to an inactive position under the effect of the hydraulic pressure prevailing in the bore (18) when the said force is released during normal operation of the hydraulic circuit, and in that the shutter (24) is also movable under the effect of a difference between the pressures which are exerted on its two faces when the actuating member (40) is in the said inactive position.

2. Valve according to claim 1, characterized in that the actuating member (40) consists of a second piston movable in the bore.

3. Valve according to claim 2, characterized in that the second piston (40) is movable between a shoulder (42) formed in the bore (18) and a stop piece (44) at the end of the bore opening toward the outside of the body.

4. Valve according to claim 3, characterized in that the stop piece (44) is a nut screwed to the end of the bore (18) opening toward the outside of the body (16).

5. Valve according to claim 1, characterized in that the actuating member (60, 68) includes an elastically deformable part (60).

6. Valve according to claim 5, characterized in that the elastically deformable part (60) of the actuating member (60, 68) is fastened by means of its outer periphery to the body (16) of the valve.

7. Valve according to claim 5 or 6, characterized in that the elastically deformable part (60) of the actuating member consists of a diaphragm (60).

8. Valve according to claim 7, characterized in that the outer periphery of the diaphragm (60) is provided with a cylindrical metal insert (62).

9. Valve according to any one of claims 5 to 8, characterized in that a cap (64) is fastened to the body (16) of the valve in the vicinity of the diaphragm (60) and on the side of the latter opposite that where the piston (20) is located.

10. Valve according to claim 9, characterized in that the cap (64) is pierced with an orifice (70) at its centre.

11. Valve according to claim 5, characterized in that the actuating member (60, 68) comprises, furthermore, an actuating rod (68) on the side of the latter opposite that where the piston (20) is located.

12. Valve according to claims 10 and 11, characterized in that the actuating rod (68) passes through the orifice (70) of the cap (64).

13. Valve according to claim 12, characterized in that the actuating rod (68) comprises, in the vicinity of its end located near the diaphragm (60), a bead (72) having an outside diameter larger than that of the orifice (70) of the cap (64), this bead (72) defining two stable positions of the actuating member (60, 68).

14. Valve according to claim 13, characterized in that the actuating rod (68) and the diaphragm (60) are formed in one piece.

15. Process for bleeding a hydraulic circuit comprising a valve according to one of the preceding claims, characterized in that it involves the following steps:
- a force is exerted on the actuating member (40, 50, 60) so that the latter comes into contact with the piston (20) in order to bring the shutter (24) into its first position,
- the vacuum bleeding of the hydraulic circuit is carried out
- the force exerted on the actuating member (40, 50, 60) is released so that the latter loses contact with the piston (20) when the shutter (24) is returned to its second position under the effect of a return spring (26).

## Patentansprüche

1. Entlüftungsventil für einen Hydraulikkreis, mit einem Kolben (20), der in einer in einem Körper (16) gebildeten Bohrung (18) gleiten kann und ein Ventilelement (24) betätigt, das zwischen zwei Nebenkreisen (32, 34) angeordnet und zwischen einer ersten Stellung, in der es die Verbindung zwischen den beiden Nebenkreisen ermöglicht, und einer zweiten Stellung bewegbar ist, in der es diese Verbindung schließt, wobei das Ventilelement unter der Wirkung einer externen mechanischen Betätigung bewegbar ist, die auf ein Betätigungsorgan (40) für das Ausführen einer Unterdruckentlüftung des Hydraulikkreises ausgeübt wird, wobei die Dichtigkeit zwischen der Bohrung und dem Außenraum des Körpers von dem Betätigungsorgan (40) gewährleistet ist, dadurch gekennzeichnet, daß das Betätigungsorgan (40) von dem Kolben (20) getrennt ist, daß das Betätigungsorgan (40) unter der Wirkung des in der Bohrung (18) herrschenden Hydraulikdrucks in eine inaktive Stellung zurückkehrt, wenn die Kraft bei einem normalen Betrieb des Hydraulikkreises gelöst wird, und daß das Ventilelement (24) auch unter der Wirkung einer Differenz zwischen den Drücken beweglich ist, die an seinen beiden Seiten anliegen, wenn sich das Betätigungsorgan (40) in der inaktiven Stellung befindet.

2. Ventil nach Anspruch 1, dadurch gekennzeichnet, daß das Betätigungsorgan (40) durch einen in der Bohrung beweglichen zweiten Kolben gebildet ist.

3. Ventil nach Anspruch 2, dadurch gekennzeichnet, daß der zweite Kolben (40) beweglich ist zwischen einem Absatz (42), der in der Bohrung (18) gebildet ist, und einem Anschlagteil (44) an dem zum Außenraum des Körpers mündenden Ende der Bohrung.

4. Ventil nach Anspruch 3, dadurch gekennzeichnet, daß das Anschlagteil (44) eine Mutter ist, die an dem zum Außenraum des Körpers (16) mündenden Ende der Bohrung (18) verschraubt ist.

5. Ventil nach Anspruch 1, dadurch gekennzeichnet, daß das Betätigungsorgan (60, 68) einen elastisch verformbaren Abschnitt (60) aufweist.

6. Ventil nach Anspruch 5, dadurch gekennzeichnet, daß der elastisch verformbare Abschnitt (60) des Betätigungsorgans (60, 68) an seinem Außenumfang am Körper (16) des Ventils befestigt ist.

7. Ventil nach Anspruch 5 oder 6, dadurch gekennzeichnet, daß der elastisch verformbare Abschnitt (60) des Betätigungsorgans durch eine Membran (60) gebildet ist.

8. Ventil nach Anspruch 7, dadurch gekennzeichnet, daß der Außenumfang der Membran (60) mit einem zylindrischen Metalleinsatz (62) versehen ist.

9. Ventil nach einem der Ansprüche 5 bis 8, dadurch gekennzeichnet, daß an dem Körper (16) des Ventils in der Nähe der Membran (60) und auf der zur Seite des Kolbens (20) entgegengesetzten Seite eine Abdeckung (64) befestigt ist.

10. Ventil nach Anspruch 9, dadurch gekennzeichnet, daß die Abdeckung (64) in ihrer Mitte von einer Öffnung (70) durchbrochen ist.

11. Ventil nach Anspruch 5, dadurch gekennzeichnet, daß das Betätigungsorgan (60, 68) außerdem eine Betätigungsstange (68) auf der zur Seite des Kolbens (20) entgegengesetzten Seite aufweist.

12. Ventil nach den Ansprüchen 10 und 11, dadurch gekennzeichnet, daß die Betätigungsstange (68) die Öffnung (70) der Abdeckung (64) durchquert.

13. Ventil nach Anspruch 12, dadurch gekennzeichnet, daß die Betätigungsstange (68) in der Nähe ihres an der Membran (60) gelegenen Endes eine Verdickung (72) aufweist, deren Außendurchmesser größer als der Durchmesser der Öffnung (70) der Abdeckung (64) ist, wobei die Verdickung (72) zwei stabile Stellungen des Betätigungsorgans (60, 68) bestimmt.

14. Ventil nach Anspruch 13, dadurch gekennzeichnet, daß die Betätigungsstange (68) und die Membran (60) einstückig gebildet sind.

15. Verfahren zum Entlüften eines Hydraulikkreises mit einem Ventil nach einem der vorhergehenden Ansprüche, dadurch gekennzeichnet, daß es die folgenden Schritte enthält:
- auf das Betätigungsorgan (40, 50, 60) wird eine Kraft ausgeübt, damit es den Kolben (20) berührt, um das Ventilelement (24) in die erste Stellung zu bringen,
- das Unterdruckentlüften des Hydraulikkreises wird durchgeführt;
- die auf das Betätigungsorgan (40, 50, 60) ausgeübte Kraft wird gelöst, damit es sich vom Kolben (20) löst, wenn das Ventilelement (24) unter der Wirkung einer Rückstellfeder (26) in seine zweite Stellung gebracht wird.
